# EUROPÄISCHE PATENTSCHRIFT

(11) **EP 1 604 896 B1**
(45) Veröffentlichungstag und Bekanntmachung des Hinweises auf die Patenterteilung: **24.08.2011**
(21) Anmeldenummer: 05012450.2
(22) Anmeldetag: 09.06.2005
(51) Int. Cl.: B64C 13/50, B64C 3/50

(54) **Flugzeughochauftriebssystem mit Überlastsicherung**
Airplane high lift system with overload prevention
Système hypersustentateur pour avion avec prévention de surcharge

(30) Priorität: 09.06.2004 DE 102004028165; 18.11.2004 DE 102004055740
(43) Veröffentlichungstag der Anmeldung: 14.12.2005
(73) Patentinhaber: Liebherr-Aerospace Lindenberg GmbH, 88161 Lindenberg/Allgäu (DE)
(72) Erfinder: Hauber, Bernhard, Dipl.-Ing. (FH), 88171 Weiler (DE); Kohlöffel, Christian, Dipl.-Ing. (FH), 88279 Amtzell (DE)
(74) Vertreter: Herrmann, Uwe

(56) Entgegenhaltungen:
- EP-A1- 1 029 784
- EP-A2- 0 922 633
- WO-A-90/09314
- DE-B3- 10 308 301
- US-A- 5 593 109

## Beschreibung

Die Erfindung betrifft ein Flugzeughochauftriebssystem mit einer Antriebseinheit, Elementen zum Übertragen der Antriebsenergie an Antriebsstationen einzelner Segmente von Landeklappen-/Vorflügelklappensystemen sowie mit einer Überlastsicherung.

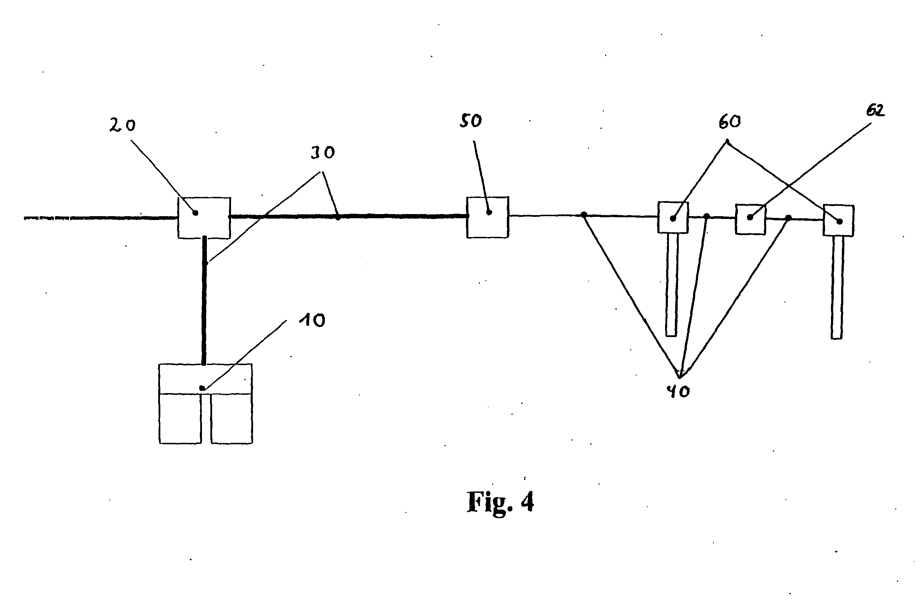

Bekannt sind Flugzeughochauftriebssysteme mit einer zentralen Antriebseinheit, die mit einem Abzweiggetriebe für zwei Flügelhälften in Verbindung steht. Dokument WO 90/09314 offenbart ein solches Hochauftriebssystem welches eine Überlastsicherung umfasst. Es stellt den nächstliegenden Stand der Technik dar. Figur 4 zeigt ebenfalls ein Hochauftriebssystem gemäß dem Stand der Technik. Dargestellt ist die Transmission des rechten Flügels. Die Antriebseinheit 10 steht über das Abzweiggetriebe 20 mit den Transmissionen beider Flügel in Verbindung. Zwischen der Hochlasttransmission 30 und der Niedriglasttransmission 40 des Flügels befindet sich der Systemlastbegrenzer 50. Mit dem Bezugszeichen 60 sind Laststationen der Flügelklappen gekennzeichnet. Das Bezugszeichen 62 bezeichnet die Transmissionsbremse.

Das notwendige Antriebsmoment der Antriebseinheit 10 wird von den Lasten beider Flügeltransmissionen bestimmt. Findet ein Systemklemmer statt (z. B. an den Laststationen 60 der Flügelklappen), dann steigt die Last in der Transmission des betroffenen Flügels, bis der Systemlastbegrenzer 50 einen weiteren Lastanstieg in der Niedriglasttransmission 40 verhindert. Das gesamte Antriebsmoment wird dabei in einen Flügel bis zum Systemlastbegrenzer 50 geleitet. Dieser hat die Aufgabe, wenigstens einen Teil der Transmission eines Flügels vor dem Antriebsmoment von zwei Flügeln zu schützen.

Als Systemlastbegrenzer 50 wird üblicherweise ein federvorgespannter Kugelrampenmechanismus verwendet, der im Falle einer Überlast einen weiteren Mechanismus betätigt, der die Überlast in die Flugzeugstruktur ableitet und auf diese Weise die Niedriglasttransmission 40 schützt.

Mit dem Bremsen der Antriebseinheit 10 kann nicht verhindert werden, dass sich ein hohes Moment in der Hochlasttransmission 30 aufgrund der kinetischen Antriebsenergie und des Blockiermomentes aufbaut. Somit muss die Hochlasttransmission 30 und die sich innerhalb dieser befindlichen Geräte auf eine sehr hohe Last/Lastspitze ausgelegt werden. Daraus ergibt sich der Nachteil eines hohen Gewichtes der Hochlasttransmission 30 und der betroffenen Geräte.

Es ist die Aufgabe der vorliegenden Erfindung in einem Flugzeughochauftriebssystem der eingangs genannten Art eine Last- und somit eine Gewichtsreduzierung zu erzielen.

Erfindungsgemäß wird diese Aufgabe durch ein Flugzeughochauftriebssystem mit den Merkmalen des Patentanspruchs 1 gelöst.

Danach weist die Überlastsicherung wenigstens einen elektrischen Überlastsensor auf, der im Antriebsstrang zwischen der Antriebseinheit und einer Abtriebsstation angeordnet ist. Davon ist auch der Fall umfasst, dass der Überlastsensor in einer Abtriebsstation angeordnet ist bzw. deren Last mißt. Mittels des elektrischen Überlastsensors kann ein Überlastzustand schnell erfasst werden, wodurch sich die Last in der Transmission rasch verringern lässt und demzufolge das Gewicht der Transmission und der betroffenen Geräte reduziert werden kann.

Des weiteren ist ein elektronischer Regler vorgesehen, der mit dem oder den Überlastsensoren sowie mit der Antriebseinheit in Verbindung steht und der Mittel aufweist, durch die bei Aufnahme einer einen Grenzwert übersteigenden Last ein elektrisches Signal an die Antriebseinheit einspeisbar ist.

Um die Antriebsenergie sehr schnell reduzieren zu können und vorzugsweise das System auf niedrigem Lastniveau anzuhaltenführt das Signal zu einem Reversierbetrieb und vorzugsweise Anhalten der Antriebseinheit. Dabei kann vorgesehen sein, dass der Regleralgorithmus des Reglers derart ausgestaltet ist, dass nach Eingang eines Überlastsignals eine Umkehr der Drehrichtungssollwertvorgabe an die Antriebseinheit generiert wird, bis der Ist-Wert der Antriebsdrehzahl den Wert Null annimmt.

In bevorzugter Ausgestaltung der Erfindung umfasst die Überlastsicherung einen mechanisch betätigten elektrischen Überlastsensor.

Der Überlastsensor kann im Antriebsstrang innerhalb der jeweils der Antriebseinheit nächstgelegenen Abtriebsstation angeordnet sein.

Weiterhin kann vorgesehen sein, dass die Antriebseinheit zur schnellen Regelung der Antriebsleistung hochdynamische Antriebe, insbesondere Hydromotore mit verstellbarem Verdrängervolumen oder bürstenlose Gleichstrommotoren umfasst.

Besonders vorteilhaft ist es, wenn der oder die Überlastsensoren ein mechanisches Element umfassen oder mit diesen in Verbindung stehen, das die Verdrehsteifigkeit der Einheit bei Überschreiten eines eingestellten Maximal-Drehmomentes verringert. Dabei kann es sich beispielsweise um einen Kugelrampenmechanismus handeln.

Weiterhin kann vorgesehen, dass der oder die Überlastsensoren einen elektromechanischen Schalter oder einen Induktivnäherungsschalter aufweisen bzw. aus diesen bestehen.

Weitere Einzelheiten und Vorteile der Erfindung werden anhand eines in der Zeichnung dargestellten Ausführungsbeispiels näher erläutert. Es zeigen:
- Fig. 1:: eine schematische Ansicht des erfindungsgemäßen Flugzeughochauftriebssystems,
- Fig. 2:: eine schematische Ansicht des federvorgespannten Kugelrampenmechanismus mit unterschiedlichen Kennlinien,
- Fig. 3:: eine schematische Ansicht des digitalen Überwachungskonzeptes und
- Fig. 4:: eine schematische Ansicht eines Flugzeughochauftriebssystems gemäß dem Stand der Technik.

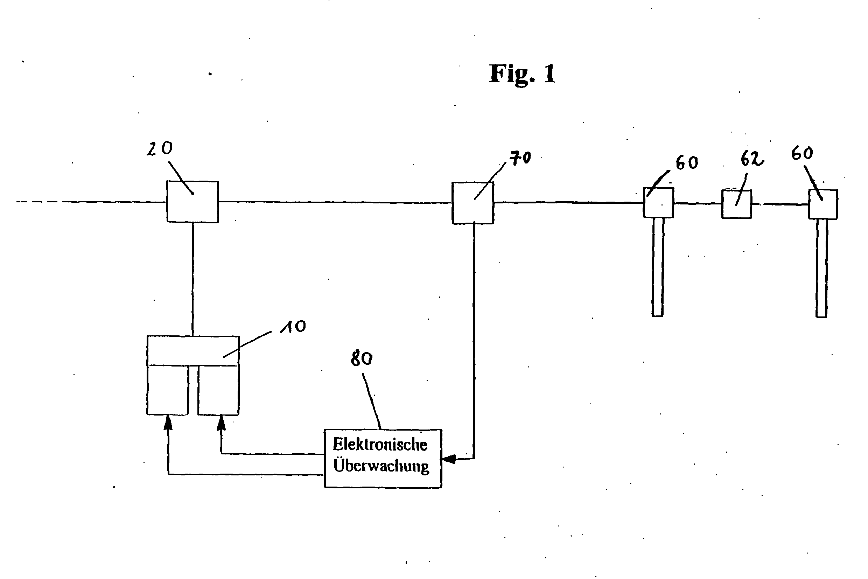

Fig. 1 zeigt die Antriebseinheit 10, die über das Abzweiggetriebe 20 mit den Transmissionen beider Flügel in Verbindung steht. Die Transmission dient zur Übertragung der Antriebsenergie über die gesamte Spannweite. In der Transmission ist der Systemlastbegrenzer 70 bzw. eine Sensoreinheit vorgesehen, der sich im Antriebsstrang bzw. in der zentralen Antriebswelle zwischen der Antriebseinheit 10 bzw. dem Abzweiggetriebe 20 und den Laststationen 60 der Flügelklappen befindet. Das Bezugszeichen 62 kennzeichnet die Transmissionsbremse. Mit dem Bezugszeichen 80 ist die elektronische Überwachung gekennzeichnet, die, wie aus Fig. 1 ersichtlich, sowohl mit dem Systemlastbegrenzer 70 als auch mit der Antriebseinheit 10 in Verbindung steht. Bei der Antriebseinheit 10 handelt es sich um Hydromotore mit verstellbarem Verdrängervolumen oder um bürstenlose Gleichstrommotore.

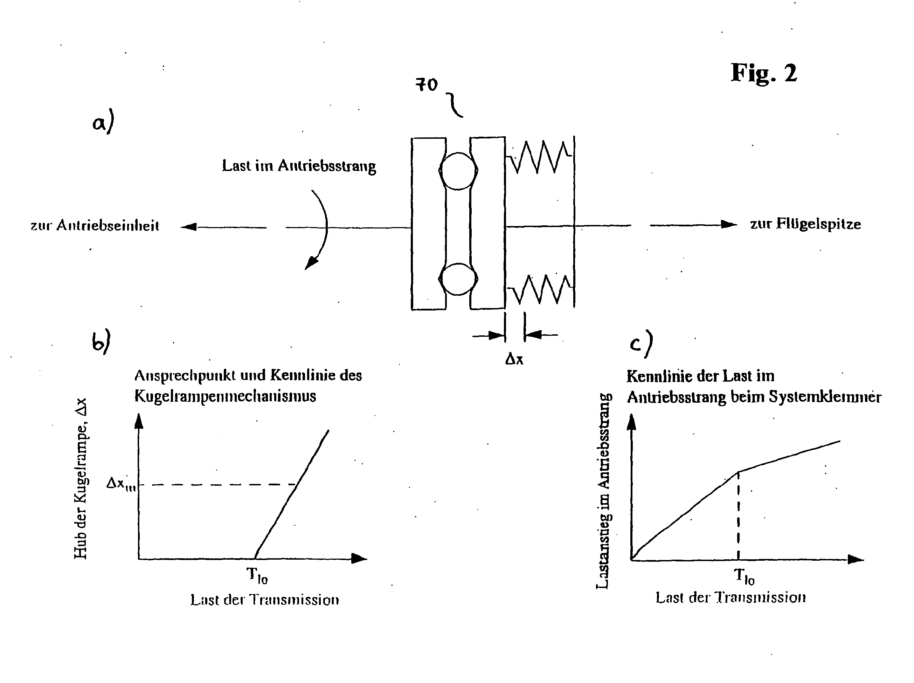

Alternativ zu der in Fig. 1 dargestellten Anordnung kann ferner vorgesehen sein, dass die Sensoreinheit in der ersten Laststation 60 (vom Flugzeugrumpf gesehen) angeordnet ist. Dabei wird die Last der ersten Station 60 gemessen und es wird eine Indikation einer Überlast der elektronischen Überwachung 80 gemeldet. In einer derartigen Ausgestaltung der Erfindung erfolgen die weiteren Schritte vorzugsweise gemäß der zu Fig. 1 beschriebenen Vorgehensweise. Bei der die Last der ersten Station 60 messenden Sensoreinheit handelt es sich vorzugsweise um den in Fig. 2a dargestellten Systemlastbegrenzer. Grundsätzlich sind auch andere Sensoreinheiten einsetzbar.

Bei dem Systemlastbegrenzer 70 handelt es sich um einen mechanisch betätigten elektrischen Überlastsensor.

Findet ein Systemklemmer statt, so wird von dem Systemlastbegrenzer 70 oder einer Sensoreinheit die Last festgestellt. Die Last wird mit einem Grenzwert verglichen. Ergibt dieser Vergleich, dass der Last-Istwert über dem Grenzwert liegt, gibt die elektronische Überwachung 80 ein entsprechendes Signal zum Abregeln der Motore der Antriebseinheit 10 ab, wie dies in Fig. 1 angedeutet ist. Der Vergleich zwischen Last-Istwert und dem Grenzwert kann in dem Systemlastbegrenzer 70 oder einer Sensoreinheit oder auch in der elektronischen Überwachung 80 stattfinden, die einen elektronischen Regler umfasst. Aufgrund der hochdynamischen Antriebe der Antriebseinheit 10 kann die Antriebsleistung sehr schnell reduziert werden, wodurch die Last in der Transmission reduziert werden kann und diese sowie die darin enthaltenen Komponenten mit entsprechend geringerem Gewicht ausgeführt werden können. Ein mit dem Systemlastbegrenzer 70 in Verbindung stehender Mechanismus, der die Überlast in die Flugzeugsstruktur ableitet, kann, muss jedoch nicht zwingend vorgesehen sein.

Der Systemlastbegrenzer 70 weist ferner einen federvorgespannten Kugelrampenmechanismus auf, der ausgelenkt wird, wenn die Last im Fall eines Systemklemmers über das erlaubte Maß steigt. Einzelheiten hierzu zeigt Fig. 2. Diese zeigt in Fig. 2a eine schematische Darstellung des Kugelrampenmechanismus. In Fig. 2b ist der Ansprechpunkt und die Kennlinie des Kugelrampenmechanismus und in Fig. 2c die Lastkennlinie im Antriebsstrang bei einem Systemklemmer wiedergegeben. Wie aus Fig. 2b ersichtlich, wird der Kugelrampenmechanismus um einen Betrag Δx ausgelenkt, wenn die Last der Transmission den Wert T₁ₒ überschreitet. Diese Auslenkung kann von einem geeigneten Sensor, beispielsweise von einem Näherungsschalter erfasst und an die elektronische Überwachung 80 weitergeleitet werden. Der Grenzwert der Auslenkung des Kugelrampenmechanismus ist in Fig. 2b mit dem Zeichen Δxₘ gekennzeichnet. Wird dieser Grenzwert erreicht, gibt die elektronische Überwachung 80 Signale an die Antriebseinheit 10, die zu einer raschen Verringerung des Antriebsmomentes führen.

Ein positiver Nebeneffekt des Kugelrampenmechanismus besteht darin, dass beim Ansprechen des Mechanismus (Last der Transmission ≥ T₁ₒ) der Lastanstieg nicht mehr so steil verläuft, wie dies aus Fig. 2c hervorgeht. Somit wird Zeit für die elektronische Überwachung gewonnen.

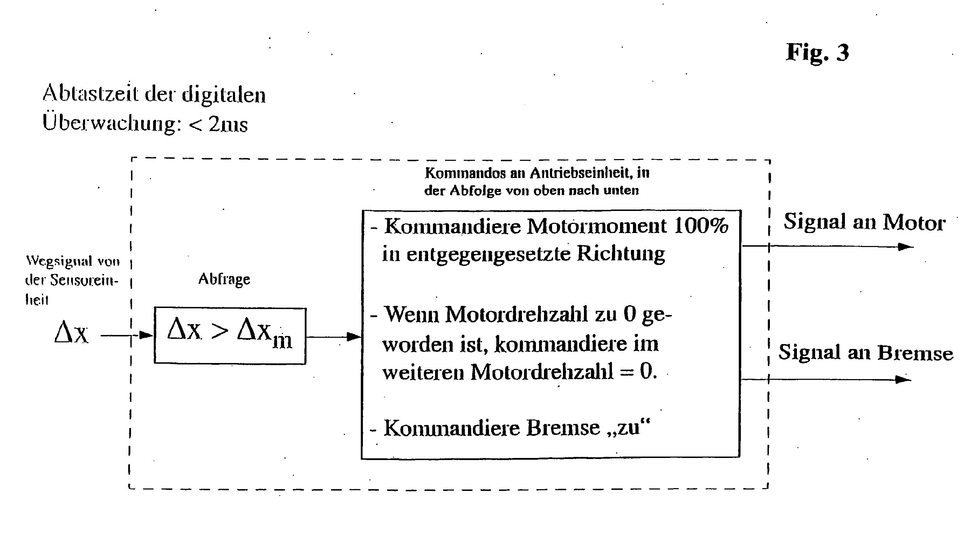

Fig. 3 zeigt eine schematische Darstellung der elektronischen Überwachung 80, die einen elektronischen Regler aufweist. Wie aus Fig. 2 ersichtlich, wird von einer Sensoreinheit das Wegsignal Δx erfasst und an die elektronische Überwachung 80 übermittelt. Hier erfolgt die Abfrage, ob das Wegsignal den Grenzwert Δxₘ übersteigt. Ist dies der Fall, gibt die elektronische Überwachung an die Antriebseinheit folgende Kommandos bzw. Signale:

Das Motormoment wird zu 100 % in entgegengesetzte Richtung geschaltet; beträgt die Motordrehzahl 0, wird dieser Wert beibehalten; des Weiteren erhält die Bremse das Kommando: "zu".

Somit wird bei Aufnahme einer den Grenzwert übersteigenden Last ein elektrisches Signal an das Antriebssystem eingespeist, das dazu führt, dass durch Reversierbetrieb der Antriebseinheit die Antriebsenergie sehr schnell reduziert wird und das System auf niedrigem Lastniveau anhält.

Mit der vorliegenden Erfindung lassen sich zusammengefasst folgende Vorteile erzielen. Es wird eine wesentliche Last- und damit Gewichtsreduzierung erreicht. Es ist eine Indikation und Rückmeldung von Überlasten infolge von Systemklemmern möglich. Diese Indikation kann in verschiedene bereits vorhandene Systemkomponenten integriert werden. Durch entsprechende konstruktive Gestaltung des Mechanismus zur Indikation kann eine Verzögerung des Lastanstiegs bei Überlasten erreicht werden. Des Weiteren kann ein digitales Überwachungskonzept vorgesehen sein, das mit dem Überlastsensor sowie mit der Antriebseinheit in Verbindung steht. Durch eine aktiv geregelte Reduzierung des Auslaufmomentes durch "Gegensteuern" kann besonders schnell eine Reduzierung der Überlast erreicht werden. Ferner ist das System ohne weiteres auf seine Funktion testbar.

Neben der bereits genannten Last- und Gewichtsreduzierung hat das erfindungsgemäße Flugzeughochauftriebssystem den Vorteil einer hohen Zuverlässigkeit und ist einfach zu testen, um eine ordnungsgemäße Funktion über die gesamte Lebensdauer sicherzustellen.

Die erfindungsgemäße Überlastsicherung läßt sich relativ einfach testen. Die nachfolgende beschriebene Testfunktion wird am Boden durchgeführt und kann im Zusammenhang mit dem von Zeit zu Zeit durchgeführten Test der Transmissionsbremse erfolgen. Dazu wird eine der beiden Transmissionsbremsen (rechter oder linker Flügel) arretiert. Danach wird mit der Antriebseinheit mit niedriger Drehzahl und einem bestimmten Antriebsmoment gegen die Bremse gefahren. Das Antriebsmoment richtet sich dabei nach dem Ansprechverhalten des Kugelrampenmechanismus und muß so hoch sein, dass die Auslenkung Δxₘ sicher erreicht wird. Wenn die Antriebseinheit aufgrund der geschlossenen Transmissionsbremse zum Stehen kommt, muß eine Indikation bezüglich der Auslenkung Δxₘ erfolgen.

Erfolgt sie nicht, muß von einer fehlerhaften Überlastsicherung ausgegangen werden. Die Prozedur wird nach erfolgreicher Durchführung für eine Flügelhälfte für die zweite Flügelhälfte wiederholt.

## Patentansprüche

1. Flugzeughochauftriebssystem mit einer Antriebseinheit (10), Elementen zum Übertragen der Antriebsenergie an Antriebsstationen (60) einzelner Segmente von Landeklappen-/Vorflügelklappensystemen sowie mit einer Überlastsicherung,
**dadurch gekennzeichnet,**
**dass** die Überlastsicherung wenigstens einen elektrischen Überlastsensor (70) aufweist, der im Antriebsstrang zwischen der Antriebseinheit und einer Abtriebsstation angeordnet ist, dass ein elektronischer Regler (80) vorgesehen ist, der mit dem oder den Überlastsensoren (70) sowie mit der Antriebseinheit (10) in Verbindung steht, und der Mittel aufweist, durch die bei Aufnahme einer einen Grenzwert übersteigenden Last ein elektrisches Signal in die Antriebseinheit (10) einspeisbar ist und dass das Signal zu einem Reversierbetrieb der Antriebseinheit (10) führt, so dass die Antriebsenergie sehr schnell reduziert wird.

2. Flugzeughochauftriebssystem nach Anspruch 1, **dadurch gekennzeichnet, dass** die Überlastsicherung aus wenigstens einem mechanisch betätigten elektrischen Überlastsensor (70) besteht.

3. Flugzeughochauftriebssystem nach Anspruch 1 oder 2, **dadurch gekennzeichnet, dass** der wenigstens eine Überlastsensor (70) im Antriebsstrang innerhalb der jeweils der Antriebseinheit (10) nächstgelegenen Abtriebsstation (60) angeordnet ist.

4. Flugzeughochauftriebssystem nach einem der vorhergehenden Ansprüche, **dadurch gekennzeichnet, dass** der Regleralgorithmus derart ausgestaltet ist, dass nach Eingang eines Überlastsignals eine Umkehr der Drehrichtungssollwertvorgabe an die Antriebseinheit (10) generiert wird, bis der Istwert der Antriebsdrehzahl den Wert Null annimmt.

5. Flugzeughochauftriebssystem nach einem der vorhergehenden Ansprüche, **dadurch gekennzeichnet, dass** die Antriebseinheit (10) zur schnellen Regelung der Antriebsleistung hochdynamische Antriebe, insbesondere Hydromotore mit verstellbarem Verdrängervolumen oder bürstenlose Gleichstrommotoren umfasst.

6. Flugzeughochauftriebssystem nach einem der vorhergehenden Ansprüche, **dadurch gekennzeichnet, dass** der oder die Überlastsensoren (70) ein mechanisches Element umfassen, das die Verdrehsteifigkeit der Einheit bei Überschreiten eines eingestellten Maximaldrehmomentes verringert.

7. Flugzeughochauftriebssystem nach Anspruch 6, **dadurch gekennzeichnet, dass** es sich bei dem mechanischen Element um einen Kugelrampenmechanismus handelt.

8. Flugzeughochauftriebssystem nach einem der vorhergehenden Ansprüche, **dadurch gekennzeichnet, dass** der oder die Überlastsensoren (70) ein elektromechanischer Schalter oder ein induktiver Näherungsschalter sein können.

## Claims

1. Aircraft high-lift system having a drive unit (10), elements for transmission of the drive energy to drive stations (60) of individual segments of flap/slat systems and having overload protection,
**characterized**
**in that** the overload protection has at least one electrical overload sensor (70) which is arranged in the drive train between the drive unit and an output-drive station, in that an electronic regulator (80) is provided and is connected to the overload sensor or sensors (70) and to the drive unit (10) and has means which can feed an electrical signal to the drive unit (10) when a load which exceeds a limit value occurs, and in that the signal leads to reversing operation of the drive unit (10), such that the drive energy is reduced very quickly.

2. Aircraft high-lift system according to Claim 1, **characterized in that** the overload protection consists of at least one mechanically operated electrical overload sensor (70).

3. Aircraft high-lift system according to Claim 1 or 2, **characterized in that** the at least one overload sensor (70) is arranged in the drive train within the
respective output-drive station (60) which is closest to the drive unit (10).

4. Aircraft high-lift system according to one of the preceding claims, **characterized in that** the regulator algorithm is designed such that, after receiving an overload signal, a reversal of the rotation-direction nominal-value preset is generated to the drive unit (10), until the actual value of the drive rotation speed assumes the value zero.

5. Aircraft high-lift system according to one of the preceding claims, **characterized in that**, in order to provide rapid closed-loop control of the drive power, the drive unit (10) comprises highly dynamic drives, in particular hydromotors with an adjustable displacement volume or brushless direct-current motors.

6. Aircraft high-lift system according to one of the preceding claims, **characterized in that** the overload sensor or sensors (70) comprises or comprise a mechanical element which reduces the rotational stiffness of the unit when a selected maximum torque is exceeded.

7. Aircraft high-lift system according to Claim 6, **characterized in that** the mechanical element is a ball-and-ramp mechanism.

8. Aircraft high-lift system according to one of the preceding claims, **characterized in that** the overload sensor or sensors (70) may be an electromechanical switch or an inductive proximity switch.

## Revendications

1. Système hypersustentateur pour avion avec une unité d'entraînement (10), des éléments pour le transfert de l'énergie d'entraînement à des stations d'entraînement (60) de segments individuels de systèmes de volets d'atterrissage/volets de bec mobile et avec une protection de surcharge, **caractérisé en ce que** la protection de surcharge présente au moins un capteur de surcharge électrique (70) qui est disposé dans le brin d'entraînement entre l'unité d'entraînement et une station de sortie, **en ce qu'**un régulateur électronique (80) est prévu qui est relié au ou aux capteurs de surcharge (70) et à l'unité d'entraînement (10) et qui présente des moyens par lesquels, lors de la réception d'une charge dépassant une valeur limite, un signal électrique peut être introduit dans l'unité d'entraînement (10), et **en ce que** le signal entraîne un fonctionnement réversible de l'unité d'entraînement (10) de sorte que l'énergie d'entraînement est très rapidement réduite.

2. Système hypersustentateur pour avion selon la revendication 1, **caractérisé en ce que** la protection de surcharge est constituée d'au moins un capteur de surcharge électrique (70) actionné mécaniquement.

3. Système hypersustentateur pour avion selon la revendication 1 ou 2, **caractérisé en ce qu'**au moins un capteur de surcharge précité (70) est disposé dans le brin d'entraînement à l'intérieur de la station de sortie (60) respectivement la plus proche de l'unité d'entraînement (10).

4. Système hypersustentateur pour avion selon l'une des revendications précédentes, **caractérisé en ce que** l'algorithme du régulateur est conçu de façon qu'après l'entrée d'un signal de surcharge, une inversion de la spécification de la valeur de consigne de direction de rotation est générée à l'unité d'entraînement (10) jusqu'à ce que la valeur réelle du nombre de tours d'entraînement prend la valeur zéro.

5. Système hypersustentateur pour avion selon l'une des revendications précédentes, **caractérisé en ce que** l'unité d'entraînement (10), pour la régulation rapide de la puissance d'entraînement, comprend des entraînements hautement dynamique, en particulier des moteurs hydrauliques avec un volume de refoulement ajustable ou bien des moteurs à courant continu sans balais.

6. Système hypersustentateur pour avion selon l'une des revendications précédentes, **caractérisé en ce que** le ou les capteurs de surcharge (70) comprennent un élément mécanique qui réduit la rigidité en torsion de l'unité lors du dépassement d'un couple de rotation maximale réglé.

7. Système hypersustentateur pour avion selon la revendication 6, **caractérisé en ce que** dans le cas de l'élément mécanique, il s'agit d'un mécanisme de rampe sphérique.

8. Système hypersustentateur selon l'une des revendications précédentes, **caractérisé en ce que** le ou les capteurs de surcharge (70) peuvent être un commutateur électromécanique ou un capteur d'approche inductif.
